# EUROPÄISCHE PATENTSCHRIFT

(11) **EP 0 752 944 B1**
(45) Veröffentlichungstag und Bekanntmachung des Hinweises auf die Patenterteilung: **25.02.1998**
(21) Anmeldenummer: 95913115.2
(22) Anmeldetag: 14.03.1995
(51) Int. Cl.: B60T 13/72

(54) **VENTILBAUGRUPPE ZUM STEUERN EINES PNEUMATISCHEN BREMSKRAFTVERSTÄRKERS MIT EINER ELEKTROMAGNETISCHEN BETÄTIGUNGSEINRICHTUNG**
VALVE ASSEMBLY FOR CONTROLLING A PNEUMATIC BRAKE BOOSTER WITH A SOLENOID ACTUATOR
BLOC DE SOUPAPES SERVANT A PILOTER UN SERVOFREIN PNEUMATIQUE A SYSTEME D'ACTIONNEMENT ELECTROMAGNETIQUE

(30) Priorität: 28.03.1994 DE 4410769
(43) Veröffentlichungstag der Anmeldung: 15.01.1997
(73) Patentinhaber: LUCAS INDUSTRIES PUBLIC LIMITED COMPANY, Solihull, West Midlands B91 3TX (GB)
(72) Erfinder: MOHR, Kurt, D-56283 Halsenbach-Ehr (DE)
(74) Vertreter: Schmidt, Steffen J., Dipl.-Ing.
(86) Internationale Anmeldenummer: EP9500954
(87) Internationale Veröffentlichungsnummer: WO9526289

(56) Entgegenhaltungen:
- EP-A- 0 505 603
- US-A- 4 608 825

## Beschreibung

Die Erfindung betrifft eine Ventilbaugruppe zum Steuern eines pneumatischen Bremskraftverstärkers mit den Merkmalen des Oberbegriffs des Patentanspruches 1.

Eine solche Ventilbaugruppe ist aus der EP-0 405 603A2 bekannt.

Bei diesem Stand der Technik ist die den Bremskraftverstärker steuernde Ventilbaugruppe so gestaltet, daß der Bremskraftverstärker Notbremsungen sehr wirksam unterstützt, sich aber bei "normalen" Bremsungen nicht wesentlich anders als in der gewohnten Weise verhält. Unter einer "Notbremsung" versteht man eine sehr starke, ruckartig einsetzende Pedalbetätigung des Fahrers, während eine "normale" Bremsung dann vorliegt, wenn der Fahrer das Bremspedal sanft betätigt. Eine Notbremsung wird bisweilen auch als "Panikbremsung" bezeichnet. Es ist bekannt, daß bei derartigen Panikbremsungen, die ja relativ selten vorkommen, die meisten Fahrer das Bremspedal zu vorsichtig betätigen und sich scheuen, das Pedal voll durchzutreten. Der eingangs genannte stand der Technik gemäß der EP-0 405 603A2 hilft diesem Problem dadurch ab, daß bei einer starken Bremsung der Bremskraftverstärker noch für eine zusätzliche und verstärkte Bremskraftunterstützung mittels einer besonderen Ventilbaugruppe ausgestaltet ist.

Bei diesem Stand der Technik ist hierzu vorgesehen, daß über die üblichen beiden Ventilsitze des Steuergehäuses des Bremskraftverstärkers hinaus noch ein zusätzliches Ventil vorgesehen ist mit einer Hülse, die das Steuergehäuse mit radialem Abstand umschließt und die in Bezug auf das Steuergehäuse axial verschiebbar ist. Dabei ist die Hülse in Richtung auf den Ventilsitz des zusätzlichen Ventils vorgespannt und zwischen der Hülse und dem Steuergehäuse ist ein zusätzlicher Belüftungskanal gebildet, durch den bei einer Notbremsung zusätzlich die Überdruckkammer des Bremskraftverstärkers mit Luft beschickt wird.

Bei diesem Stand der Technik ist eine rein mechanische Betätigung der Ventilbaugruppe in Ansprache auf eine Betätigung des Bremspedals (durch den Fahrer) vorgesehen.

Im Stand der Technik ist es auch schon bekannt, für Bremskraftverstärker neben der mechanischen Betätigung auch eine elektromagnetische Betätigung vorzusehen, mittels der in der Überdruckkammer des Bremskraftverstärkers (der Begriff "Überdruck" bedeutet, daß in dieser Kammer ein höherer Luftdruck herrscht als in der evakuierten Kammer) in bestimmten Bremssituationen sehr schnell ein höherer Luftdruck erzeugt wird als in "normalen" Bremssituationen. Solche elektromagnetisch betriebenen Zusatzluftsteuerungen sind aus DE 4 217 409 A1, DE 4 309 850 A1 und DE-GM 9 202 154 bekannt.

Aus der EP 0 478 396 A1 ist ein pneumatischer Bremskraftverstärker mit einem Gehäuse bekannt, das in eine Unterdruckkammer und eine Arbeitskammer geteilt ist, wobei an dem Gehäuse eine zweifache Ventilanordnung mit einem ersten Ventil zwischen der Unterdruckkammer und der Arbeitskammer und einem zweiten Ventil zwischen der Atmosphäre und der Arbeitskammer angeordnet ist. Die Ventilanordnung ermöglicht in einer Ruhestellung ein von der Atmosphäre getrenntes Druckniveau in der Unterdruckkammer und der Arbeitskammer, hält in einer Arbeitsstellung die Unterdruckkammer abgeschlossen und ermöglicht eine Verbindung zwischen der Atmosphäre und der Arbeitskammer. Im Normalbetrieb ist dieser Bremskraftverstärker durch eine Betätigungsstange betätigbar. Allerdings hat diese Anordnung den Nachteil, daß bei nicht betätigtem Pedal eine automatische Bremsung durch Aktivieren der Magnetspule nicht möglich ist, da aufgrund der großen axialen Beweglichkeit des Ventilgehäuses gegenüber der Betätigungsstange und des relativ dazu kleineren möglichen Öffnungshubes des Ventils zwischen der Arbeitskammer und der Atmosphäre kein wirksamer Abschluß der Arbeitskammer von der Unterdruckkammer über den gesamten Hub des Ventilgehäuses erreichbar ist.

Aus der DE 42 11 849 A1 ist ein Bremskraftverstärker bekannt, der sich mit geringen Bewegungen des Betätigungsgliedes besonders feinfühlig steuern läßt. Dazu ist dieser Anordnung durch ein Anschlagglied, das an einem zwischen Betätigungsglied und Kraftabgabeglied angeordneten Kolben befestigt ist, sich mit Axialspiel durch eine Aussparung eines Ventilkörpers hindurcherstreckt und sich radial außerhalb davon an einem gehäusefesten Anschlag abstützen kann, die Möglichkeit geschaffen, den Ventilkörper in jeder beliebigen Stellung des Kolbens, also auch ausgehend von der Ruhestellung, elektromagnetisch zu betätigen, ohne daß dadurch die genaue Positionierung des Ventilkörpers in dessen Ruhestellung beeinträchtigt wird.

Der vorliegenden Erfindung liegt die Aufgabe zugrunde, eine Ventilbaugruppe zum Steuern eines pneumatischen Bremskraftverstärkers so auszugestalten, daß mit möglichst geringem baulichen Aufwand neben einer mechanisch ausgelösten zusätzlichen Bremskraftverstärkung bei Notbremsungen auch eine weitere, elektromagnetische Betätigung des Bremskraftverstärkers ermöglicht ist.

Die erfindungsgemäße Lösung dieser Aufgabe ist im Patentanspruch 1 gekennzeichnet. Danach wird also die im oben zitierten Stand der Technik vorgesehene Hülse nicht nur mechanisch bei einer Betätigung des Bremspedals im Falle einer Notbremsung in eine Stellung bewegt, in der Zusatzluft in eine Kammer des Bremskraftverstärkers eingeführt wird, sondern es ist darüber hinaus auch eine mittels eines elektrischen Signals auslösbare Bewegung der Hülse möglich. Somit kann unabhängig und/oder abhängig von einer mittels Pedalbetätigung ausgelösten Bremsung auch der Bremskraftverstärker durch elektrische Signale gesteuert werden. Hierzu schlägt die Erfindung eine baulich einfache und funktionssichere Anordnung vor.

Gemäß einer bevorzugten Ausgestaltung der Erfindung weist die elektromagnetische Betätigungseinrichtung einen Anker auf, der mit dem mechanischen Betätigungsglied (welches mit dem Bremspedal gekoppelt ist) verbunden ist.

Eine weitere bevorzugte Ausgestaltung der erfindungsgemäßen Ventilbaugruppe sieht vor, daß eine Spule der elektromagnetischen Betätigungseinrichtung das mechanische Betätigungsglied des Bremskraftverstärkers konzentrisch umfängt und daß ein Gehäuse der Spule relativ zum Betätigungsglied bewegbar ist, um die Hülse zu bewegen.

Schließlich sieht eine weitere bevorzugte Ausgestaltung der Ventilbaugruppe vor, daß im Steuergehäuse eine Schließhülse angeordnet ist, die bei einer Öffnung des dritten Ventilsitzes mittels der elektromagnetischen Betätigungseinrichtung eine Belüftung der evakuierten Kammer des Bremskraftverstärkers verhindert.

Nachfolgend wird ein Ausführungsbeispiel der Erfindung anhand der Zeichnungen näher beschrieben. Es zeigt:
- Fig. 1: schematisch einen Bremskraftverstärker mit einer Ventilbaugruppe für seine Steuerung einschließlich einer elektromagnetischen Betätigungseinrichtung und
- Fig. 2: die Ventilbaugruppe einschließlich der elektromagnetischen Betätigungseinrichtung in vergrößertem Maßstab.

Bei der nachfolgenden Beschreibung von Einzelheiten der Erfindung wird die Kenntnis der eingangs genannten EP-0 405 603 vorausgesetzt, deren Offenbarung hier ausdrücklich eingeschlossen ist.

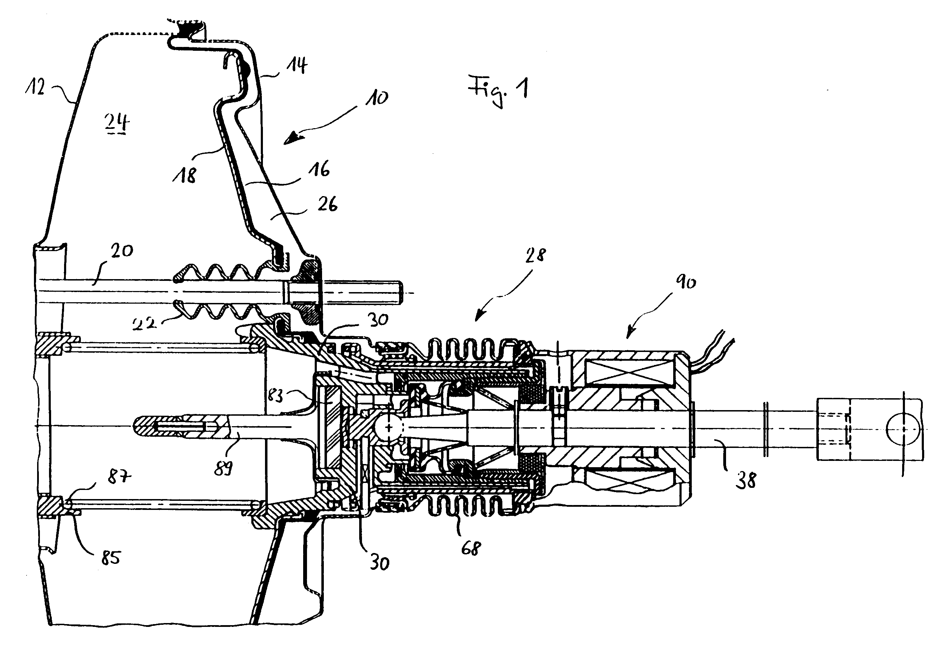

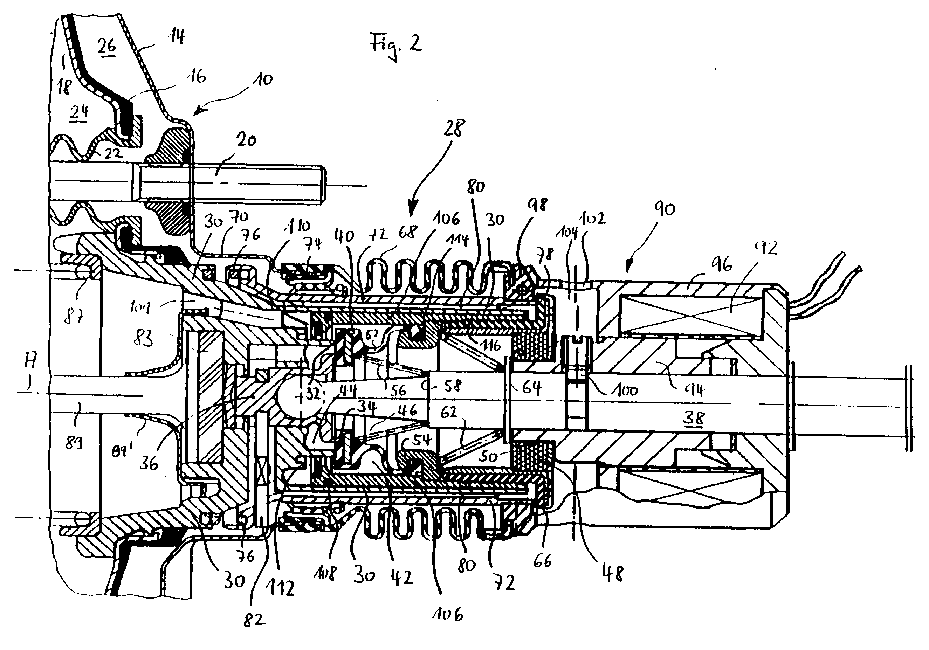

Der in Fig. 1 und 2 dargestellte Bremskraftverstärker 10 hat zwei Gehäuseteile 12 und 14, die in Bezug auf eine Achse A im wesentlichen rotationssymmetrisch gestaltet sind und an ihrem äußeren Rand eine Membran 16 zwischen sich eingespannt halten. Die Membran 16 bildet zusammen mit einer starren Stützplatte 18 eine bewegliche Wand; durch diese erstrecken sich parallel zur Achse A Verbindungsstangen 20 hindurch, welche die Gehäuseteile 12 und 14 miteinander verbinden und durch je einen Faltenbalg 22 gegen die bewegliche Wand 16, 18 abgedichtet sind. Die bewegliche Wand 16, 18 trennt zwei Kammern 24 und 26 voneinander, von denen die in üblicher Einbaulage des Bremskraftverstärkers vordere Kammer 24 ständig mit einer Vakuumquelle, beispielsweise mit der Saugleitung eines Otto-Motores, verbunden ist und die hintere Kammer 26 durch eine Ventilbaugruppe 28 wahlweise mit der vorderen Kammer 24 oder mit der äußeren Atmosphäre verbindbar ist.

Zur Ventilbaugruppe 28 gehört ein rohrförmiges Steuergehäuse 30, das in Bezug auf die Achse A im wesentlichen rotationssymmetrisch gestaltet ist und mit der beweglichen Wand 16, 18 fest und dicht verbunden ist. Im Steuergehäuse 30 ist ein ringförmiger erster Ventilsitz 32 ausgebildet.

Ein zweiter, ebenfalls ringförmiger Ventilsitz 34 von kleinerem Durchmesser ist gleichachsig mit dem ersten Ventilsitz 32 an einem Stössel 36 ausgebildet, der mittels eines Betätigungsgliedes 33 längs der Achse A verstellbar ist. Das Betätigungsglied 38 läßt sich in üblicher Weise mit dem Bremspedal (nicht gezeigt) eines Kraftfahrzeuges verbinden.

Beiden Ventilsitzen 32, 34 ist ein gemeinsamer Ventilkörper 40 zugeordnet, der zusammen mit dem ersten Ventilsitz 32 einen radial äußeren Ringraum 42 innerhalb des Steuergehäuses 30 von einem ringförmigen Zwischenraum 44 zwischen den beiden Ventilsitzen trennen kann, und der zusammen mit dem zweiten Ventilsitz 34 einen Innenraum 46 vom Zwischenraum 44 trennen kann. Der radial äußere Ringraum 42 ist an die vordere Kammer 24, der ringförmige Zwischenraum 44 an die hintere Kammer 26 angeschlossen. Der Innenraum 46 steht über ein Filter 48 ständig mit der äußeren Atmosphäre in Verbindung, so daß Luft über einen Lufteinlaß 50 in das Steuergehäuse 30 einströmen kann.

Der Ventilkörper 40 ist durch eine Manschette 52 aus Gummi oder einem Elastomeren mit einem Stützring 54 verbunden, der in das Steuergehäuse 30 dicht und fest eingebaut ist. Durch eine erste Kegelfeder 56, die sich an einer Schulter 58 des Betätigungsgliedes 38 abstützt, ist der Ventilkörper 40 in Richtung zu den beiden Ventilsitzen 32 und 34 hin vorgespannt. Der Stützring 54 liegt in einer Stufe 114 einer weiter unten näher beschriebenen Schließhülse 106 und wird dort mittels einer Feder 62 verspannt, die sich an einem Sicherungsring 64 des Betätigungsgliedes 38 abstützt.

Ein Faltenbalg 68 ist an einem Kragen 70 des Gehäuseteils 14 befestigt. Auf diese Weise ist ein Ringraum rings um das Steuergehäuse 30 gegen das Eindringen von Schmutz und ungefilterter Luft geschützt. Innerhalb dieses Ringraumes ist eine Hülse 72 angeordnet, die durch eine Ringdichtung 74 gegen den Kragen 70 des Gehäuseteils 14 abgedichtet ist, ohne dadurch an Bewegungen längs der Achse A gehindert zu sein. Die Hülse 72 ist durch eine am Gehäuseteil 14 abgestützte Feder 76 nach hinten, also in Richtung zum dritten Ventilsitz 66 hin, vorgespannt und bildet mit ihrem hinteren Ende 78 einen weiteren, normalerweise gegen den dritten Ventilsitz 66 abgedichteten Ventilkörper. Zwischen dem Steuergehäuse 30 und der Hülse 72 ist ein im wesentlichen zylindrischer Ringraum freigelassen, der einen in die hintere Kammer 26 mündenden zusätzlichen Belüftungskanal 80 bildet.

Der Stößel 36 hat eine Ringnut, in die ein ungefähr haarnadelförmiges Übertragungsglied 82 fest und spielfrei eingerastet ist. Vom Stössel 36 erstreckt sich das Übertragungsglied 82 radial durch eine Aussparung im Steuergehäuse 30 und eine Aussparung in der Hülse 72 hindurch bis annähernd zur Innenwand des Kragens 70. Dort ist ein ringförmiger Anschlag befestigt, der die Bewegungen des Übertragungsgliedes 82 und somit des Stössels 36 nach hinten begrenzt.

Im vorderen Endbereich des Steuergehäuses 30 ist ein Kraftabgabeglied 89 mittels einer Halterung 89' befestigt. Zwischen dem Stössel 36 und dem Kraftabgabeglied 89 ist ein Elastomerkörper 83 angeordnet, der im übrigen vom Steuergehäuse 30 umschlossen ist und einen Kraftübersetzer zwischen dem Betätigungsglied 38 und dem Kraftabgabeglied 83 bildet. Die gesamte Baugruppe, zu der die bewegliche Wand 16, 18 und das Steuergehäuse 30 gehören, ist von einer Rückstellfeder 87 nach hinten, in Fig. 2 also nach rechts, vorgespannt.

So lange in der vorderen Kammer 24 des Bremskraftverstärkers 10 das vorgesehene Vakuum nicht wirksam ist, beispielsweise vor dem Anlassen des Motors des Kraftfahrzeuges, nehmen die beweglichen Teile des Bremskraftverstärkers 10 und der Ventilbaugruppe 28 die in Fig. 2 gezeigte Stellung ein. Der Ventilkörper 40 liegt am ersten Ventilsitz 32, nicht aber am zweiten Ventilsitz 34 an; das von der Hülse 72 und dem dritten Ventilsitz 66 gebildete zusätzliche Ventil ist offen. Die hintere Kammer 26 ist somit sowohl über den Innenraum 46 des Steuergehäuses 30 wie auch über den zusätzlichen Belüftungskanal 80 mit der äußeren Atmosphäre verbunden. Die Verbindung zwischen den beiden Kammern 24 und 26 ist unterbrochen.

Wenn nun, beispielsweise durch Anlassen des erwähnten Otto-Motors, in der vorderen Kammer 24 ein Unterdruck entsteht, wird die bewegliche Wand 16, 18 zusammen mit dem Steuergehäuse 30 gegen den anfangs geringen Widerstand der Rückstellfeder 87 um ein kleines Stück vorwärts bewegt, während das Betätigungsglied 38 samt Stössel 36 seine Ruhestellung beibehält. Der Ventilkörper 40, der bisher nur am ersten Ventilsitz 32 angelegen hat, legt sich infolgedessen leicht an den zweiten Ventilsitz 34 an, und der dritte Ventilsitz 66 legt sich an das Ende 78 der Hülse 72 an, die ihre Ruhestellung ebenfalls beibehält. Es stellt sich ein Gleichgewichtszustand ein, in dem die vordere Kammer 24 in einem von der Vakuumquelle bestimmten Ausmaß evakuiert ist, und in der hinteren Kammer 26 ein Druck herrscht, der etwas größer ist als der Druck in der vorderen Kammer 24, jedoch deutlich geringer als der Atmosphärendruck. Der Bremskraftverstärker 10 ist nun bereit, ohne weitere Verzögerung einen nicht dargestellten Hauptbremszylinder zu betätigen, auf den das Kraftabgabeglied 89 in üblicher Weise einwirkt.

Sobald das Bremspedal auf normale Weise (also nicht in einer ruckartigen Panikbremsung) betätigt und dadurch das Betätigungsglied 38 um ein kleines Stück vorwärts geschoben wird (in den Figuren nach links), trennt sich der zweite Ventilsitz 34 vom Ventilkörper 40. Dieser liegt nun mit der vollen Kraft der ersten Kegelfeder 56 ausschließlich am ersten Ventilsitz 32 an und trennt dadurch die beiden Kammern 24 und 26 vollständig dicht voneinander, während Umgebungsluft, die durch den Filter 48 hindurch angesaugt wird, über den Innenraum 46 und den ringförmigen Zwischenraum 44 in die hintere Kammer 26 gelangt und die bewegliche Wand 16, 18 samt Steuergehäuse 30 und Kraftabgabeglied 89 vorwärts schiebt und dadurch den angeschlossenen Hauptbremszylinder (nicht gezeigt) betätigt. Währenddessen bleibt die dichte Anlage des dritten Ventilsitzes 66 am hinteren Ende 78 der Hülse 72 bestehen, so daß der zusätzliche Belüftungskanal 80 wirkungslos bleibt.

Wird jedoch das Bremspedal ruckartig und heftigst betätigt und somit über das Betätigungsglied 38 der Stössel 36 weiter nach vorne geschoben, stößt das Übertragungsglied 82 gegen einen vorderen Rand in einer Aussparung in der Hülse 72 und nimmt diese nach vorne (nach links) mit, so daß das hintere Ende 78 der Hülse 72 vom dritten Ventilsitz 66 abgehoben wird. Infolgedessen strömt nun Umgebungsluft nicht nur vom radial inneren Bereich des Filters 48 durch den Innenraum 46 und weiter durch den ringförmigen Zwischenraum 44 in die hintere Kammer 26, sondern zusätzliche Umgebungsluft strömt durch den radial äußeren Bereich des Filters 48 und weiter durch den zusätzlichen Belüftungskanal 80 ebenfalls in die hintere Kammer 26, so daß der dort herrschende Druck sich sehr rasch dem Umgebungsdruck angleicht und die bewegliche Wand 16, 18 samt Kraftabgabeglied 89 entsprechend schnell vorwärts geschoben wird.

Diese Funktion der bisher beschriebenen Ventilbaugruppe ist insoweit auch der bereits genannten EP-0 405 603A2 zu entnehmen.

Darüber hinaus ist nun am pedalseitigen Ende des Verstärkerhalses 70 eine elektromagnetische Betätigungseinrichtung 90 vorgesehen, die eine weitere Möglichkeit eröffnet, die oben beschriebene Ventilbaugruppe zu betätigen. Die elektromagnetische Betätigungseinrichtung 90 weist eine Spule 92 auf. Ein Anker 94 ist mittels einer Schraube 100 (Madenschraube) fest mit dem Betätigungsglied 38 des Bremskraftverstärkers verbunden. Der Anker 94 ist bei diesem Ausführungsbeispiel also ortsfest in Bezug auf das Betätigungsglied 38. Ein Gehäuse 96 der elektromagnetischen Betätigungseinrichtung 90 umschließt die Spule 92. Das Gehäuse 96 ist mittels eines Halteringes 98 dichtend und starr mit der Hülse 72 verbunden. Auch der Faltenbalg 68 ist fest mit dem Verbindungsring 98 verbunden. Im Gehäuse 96 der elektromagnetischen Betätigungseinrichtung 90 ist eine Öffnung 102 vorgesehen, in die ein Kanal 104 mündet, der an seinem anderen Ende mit dem Filter 48 bzw. dem zugehörigen Lufteinlaß 50 in Verbindung steht.

Im Steuergehäuse 30 ist eine Schließhülse 106 angeordnet. Die Schließhülse 106 hat die Aufgabe, bei einer Betätigung des Bremskraftverstärkers allein mittels der elektromagnetischen Betätigungseinrichtungen 90, ohne daß das Bremspedal und damit das Betätigungsglied 38 bewegt wird, eine leitende Verbindung 109 zur Vakuumkammer 24 über den Ventilkörper 40 (bedingt durch ein Vorlaufen der beweglichen Wand 16, 18) zu verhindern und somit sicherzustellen, daß eine Druckdifferenz in den Kammern 24, 26 aufgebaut werden kann, wie weiter unten näher beschrieben ist.

Die Schließhülse 106 weist zum einen eine äußere Dichtung 108 auf zum Abdichten im Steuergehäuse 30 und zum anderen eine innere Dichtfläche 110, welche mit einer weiteren (zusätzlich zum Ventilsitz 32) Dichtkante 112 in abdichtenden Eingriff gebracht werden kann, um den Verbindungskanal zwischen den beiden Kammern 24, 26 des Bremskraftverstärkers 10 zu schließen.

Wie oben bereits ausgeführt ist, ist die Schließhülse 106 mit dem Stützring 54 über eine Stufe 114 in der Innenwand der Schließhülse 106 gekoppelt und wird dort durch die Feder 62 vorgespannt.

Im hinteren Bereich der Hülse ist ein Dichtungsgummi 116 aufvulkanisiert. Die Schließhülse 106 wird durch die Feder 76 der Hülse 72 in ihrer Ausgangsposition gehalten. Die in entgegengesetzter Richtung wirkende Feder 62 ist schwächer.

Nachfolgend wird die elektromagnetische Betätigung der Ventilbaugruppe beschrieben.

Bei Erregung der Spule 92 der elektromagnetischen Betätigungseinrichtung 90 wird nicht der fest mit dem Betätigungsglied 38 verbundene Anker 94 bewegt, sondern vielmehr das Gehäuse 96 der Spule relativ zum Anker, und zwar in Fig. 2 nach links. Hierdurch wird über den Verbindungsring 98 die Hülse 72 gegen die Feder 76 (nach links) verschoben.

Die durch die Feder 62 vorgespannte Schließhülse 106 mit dem Dichtgummi 116 folgt der Öffnungsbewegung der Hülse 72.

Die Schließhülse 106 kann der Bewegung der Hülse 72 so lange folgen bis ihre innere Dichtfläche 110 an der Dichtkante 112 des Steuergehäuses 30 anschlägt und mit diesem in abdichtenden Eingriff kommt. Jetzt kann sich die Schließhülse 106 vom Dichtgummi 116 trennen und eine Verbindung zur äußeren Atmosphäre herstellen (über den Kanal 104 und die Öffnung 102). Die auf diese Weise von außen zuströmende Luft erzeugt nun ein Ansteigen des Druckes in der hinteren Kammer 26 des Bremskraftverstärkers 10 und somit eine Bewegung der Wand 16, 18 in Fig. 2 nach links zur Kraftübertragung mittels des Kraftabgabegliedes 89.

Wie oben erwähnt ist, wurde bisher das Betätigungsglied 38 des Bremskraftverstärkers nicht mittels des Bremspedals bewegt. Das Betätigungsglied 38 kann der Vorwärtsbewegung der beweglichen Wand 16, 18 des Bremskraftverstärkers erst dann folgen, wenn das Übertragungsglied 82 (hier als Querriegel ausgebildet) am Steuergehäuse 30 anschlägt. Danach wird das Betätigungsglied mitgeschleppt. In dieser Schlepp-Phase wird durch den Anschlag des Ventilkörpers 40 an dem inneren Ventilsitz 34 die Vakuumverbindung 109 zwischen den beiden Kammern 24, 26 geöffnet, was ohne weitere Maßnahme zur Folge hätte, daß die beiden Kammern in leitender Verbindung stehen und ein Druckausgleich stattfinden würde, was selbstverständlich zu verhindern ist. Deshalb wird der Verbindungskanal 109 durch die Schließhülse 106 verschlossen, bevor überhaupt eine leitende Verbindung zwischen den Kammern 24, 26 hergestellt werden kann. Somit ist ein ungehinderter Aufbau einer Druckdifferenz zwischen den Kammern 24, 26 möglich.

Auf diese Weise läßt sich der Bremskraftverstärker voll automatisch ohne Betätigung des Bremspedals allein durch Aktivierung der elektromagnetischen Betätigungseinrichtungen 90 betätigen. Soll das automatische elektromagnetisch-pneumatische Bremsen beendet werden, wird die Stromzufuhr zur Spule 92 unterbrochen. Die Feder 76 schiebt dann die Hülse 72 und über den Dichtgummi 116 die Schließhülse 106 gegen die Kraft der Feder 62 nach rechts in die Ausgangsposition zurück. Dadurch wird die Verbindung 109 zwischen den Kammern 24, 26 wieder geöffnet und es erfolgt Druckausgleich zwischen den Kammern und damit wird der Bremskraftverstärker 10 unwirksam.

Der vorstehend beschriebene Aufbau des Bremskraftverstärkers einschließlich der zusätzlichen elektromagnetischen Betätigungseinrichtung 90 ermöglicht eine Reihe von vorteilhaften Steuerungen der Bremsanlage eines Fahrzeuges, das hiermit ausgerüstet ist.

Zunächst ist es möglich, mittels der unabhängig von einer Betätigung des Bremspedals durch den Fahrer möglichen Aktivierung der elektromagnetischen Betätigungseinrichtung 90 eine automatische Geschwindigkeitssteuerung für das mit der Bremsanlage ausgerüstete Fahrzeug vorzusehen (sogenannte "Cruise-Control).

Weiterhin ist es möglich, eine sogenannte Not- oder Panikbremsung zu verbessern. Wird nämlich das Bremspedal vom Fahrer mit einer relativ hohen Geschwindigkeit getreten (einer Geschwindigkeit oberhalb eines vorgegebenen Schwellenwertes) dann kann hieraus abgeleitet werden, daß eine sogenannte Notbremssituation vorliegt. In einer solchen Notbremssituation ist es wichtig, den Bremskraftverstärker maximal wirken zu lassen. Wird also eine Notbremssituation dadurch festgestellt, daß die Betätigungsgeschwindigkeit des Pedals über einem vorgegebenen Grenzwert liegt, dann steuert eine elektronische Steuerung der Bremsanlage die elektromagnetische Betätigungseinrichtung 90 in der beschriebenen Weise, um den Ventilsitz 66 zu öffnen und dadurch über den Kanal 80 zusätzlich unter Druck stehende Luft in die hintere Kammer 26 einzuführen. Der Bremskraftverstärker wird also sowohl durch Beaufschlagung des Betätigungsgliedes 38 als auch durch Erregung der elektromagnetischen Betätigungseinrichtung 90 betätigt. Es wird ein extrem schneller Bremsdruckaufbau erreicht.

Weiterhin ist es möglich, mit der beschriebenen elektromagnetischen Betätigungseinrichtung 90 in verschiedenen Situationen eine optimale Bremsung zu erreichen. Will man beispielsweise auch bei unterschiedlichen Beladungszuständen des Kraftfahrzeuges bei gleichen Betätigungen des Bremspedales jeweils die gleiche Bremsverzögerung erzielen, so muß die Bremsanlage in Abhängigkeit vom Fahrzeuggewicht eingestellt werden. Die beschriebene elektromagnetische Betätigungseinrichtung 90 ermöglicht dies. So ist es möglich, während einer Bremsung die vom Fahrer am Bremspedal aufgebrachte Kraft zu messen und gleichzeitig auch die erreichte Bremsverzögerung. Bei einem schwer beladenen Fahrzeug wird die Bremsverzögerung geringer sein als bei einem gering beladenen Fahrzeug. Bei gleichem zeitlichen Verlauf der Pedalkräfte erzeugt also der Verzögerungssensor ein Signal, das bei stark beladenem Fahrzeug anders ist als bei gering beladenem. Entsprechend diesem Signal kann die elektronische Steuerung der Bremsanlage dann die elektromagnetische Betätigungseinrichtung 90 so steuern, daß bei gleichem zeitlichen Verlauf der Pedalkraft jeweils die gleiche Bremsverzögerung des Fahrzeuges erreicht wird. Dies bedeutet, daß bei einem schwer beladenen Fahrzeug die elektromagnetische Betätigungseinrichtung schneller und wirksamer eingesetzt wird als bei einem gering beladenen Fahrzeug.

## Patentansprüche

1. Ventilbaugruppe zum Steuern eines pneumatischen Bremskraftverstärkers (10) mit einem Steuergehäuse (30), in dem ein erster und ein zweiter Ventilsitz (32, 34) angeordnet sind, und einem an beide Ventilsitze (32, 34) anlegbaren Ventilkörper (40), der
- in einer Stellung eines Betätigungsgliedes (38) nur vom ersten Ventilsitz (32) abgehoben ist, wodurch zwei Kammern (24, 26) des Bremskraftverstärkers (10) miteinander verbunden und beide von einem Lufteinlaß (50) getrennt sind, und
- in einer anderen Stellung des Betätigungsgliedes (38) vom zweiten Ventilsitz (34) abgehoben ist, wodurch die beiden Kammern (24, 26) voneinander getrennt sind und eine von ihnen mit dem Lufteinlaß (50) verbunden ist, und mit
- einem zusätzlichen Ventil (30, 116) mit einem außerhalb des Steuergehäuses (30) angeordneten ringförmigen dritten Ventilsitz (66) und einer Hülse (72), die das Steuergehäuse (30) mit radialem Abstand umgibt und in Bezug auf dieses axial verschiebbar und in Richtung zum dritten Ventilsitz (66) vorgespannt ist und die einen zusätzlichen Belüftungskanal (80) zu einer (26) der beiden Kammern bildet,
dadurch gekennzeichnet, daß
- die Hülse (72) mittels einer elektromagnetischen Betätigungseinrichtung (90) zum Öffnen des dritten Ventilsitzes (66) bewegbar ist.

2. Ventilbaugruppe nach Anspruch 1,
dadurch gekennzeichnet, daß
die elektromagnetische Betätigungseinrichtung (90) einen Anker (94) aufweist, der mit dem mechanischen Betätigungsglied (38) des Bremskraftverstärkers (10) gekoppelt ist.

3. Ventilbaugruppe nach einem der Ansprüche 1 oder 2,
dadurch gekennzeichnet, daß
eine Spule (92) der elektromagnetischen Betätigungseinrichtung (90) das mechanische Betätigungsglied (38) des Bremskraftverstärkers (10) konzentrisch umfängt und daß ein Gehäuse (96) der Spule (92) relativ zum Betätigungsglied (38) bewegbar ist, um die Hülse (72) zu bewegen.

4. Ventilbaugruppe nach einem der vorhergehenden Ansprüche,
dadurch gekennzeichnet, daß
im Steuergehäuse (30) eine Schließhülse (106) angeordnet ist, die bei einer Öffnung des dritten Ventilsitzes (66) mittels der elektromagnetischen Betätigungsrichtung (90) eine Belüftung der evakuierten Kammer (64) des Bremskraftverstarkers (10) verhindert.

5. Ventilbaugruppe nach Anspruch 4,
dadurch gekennzeichnet, daß
die Schließhülse (106) eine äußere Dichtung (108) zum Abdichten gegen die Innenfläche der Hülse (72) und eine innere Dichtfläche (110) aufweist, die mit einer Dichtkante (112) in abdichtenden Eingriff bringbar ist, um den Verbindungskanal zwischen den beiden Kammern (24, 26) des Bremskraftverstärkers (10) zu schließen.

6. Ventilbaugruppe nach Anspruch 5,
dadurch gekennzeichnet, daß
die Schließhülse (106) mit einem Stützring (54) über eine Stufe (114) in der Innenwand der Schließhülse (106) gekoppelt und durch eine Feder (62) vorgespannt ist.

## Claims

1. A valve assembly for controlling a pneumatic brake booster (10) with a control housing (30) in which a first and a second valve seat (32, 34) are arranged, and with a valve body (40) which is adapted to contact both valve seats (32, 34) and which
- in one position of an actuation member (38) is lifted off the first valve seat (32) only, whereby two chambers (24, 26) of the brake booster (10) are connected with each other and are both separated from an air inlet (50), and
- in another position of the actuation member (38) is lifted off the second valve seat (34), whereby the two chambers (24, 26) are separated from each other and one of them is connected with the air inlet (50), and with
- an additional valve (30, 116) with an annular third valve seat (66) which is arranged outside of the control housing (30), and a sleeve (72) which encompasses the control housing (30) at a radial distance and is axially movable with respect to same and which is biased in the direction of the third valve seat (66) and forms an additional ventilation duct (80) to one of the two chambers,
characterized in that
- the sleeve (72) is movable by means of an electromagnetic actuation means (90) for opening of the third valve seat (66).

2. A valve assembly according to Claim 1,
characterized in that
the electromagnetic actuation means (90) comprises an armature (94) which is coupled with the mechanical actuation member (38) of the brake booster (10).

3. A valve assembly according to one of Claims 1 or 2,
characterized in that
a solenoid (92) of the electromagnetic actuation means (90) concentrically encompasses the mechanical actuation member (38) of the brake booster (10) and that a housing (96) of the solenoid (92) is movable relative to the actuation member (38) for moving the sleeve (72).

4. A valve assembly according to one of the previous claims,
characterized in that
a closing sleeve (106) is arranged in the control housing (30) which prevents a ventilation of the evacuated chamber (24) of the brake booster upon an opening of the third valve seat (66) by means of the electromagnetic actuation means (90).

5. A valve assembly according to Claim 4,
characterized in that
the closing sleeve (106) comprises an outer seal (108) for sealing against the inner surface of the sleeve (72) and an inner sealing surface (110) which can be brought into a sealing engagement with a sealing edge (112) in order to close the connecting duct between the two chambers (24, 26) of the brake booster (10).

6. A valve assembly according to Claim 5,
characterized in that
the closing sleeve (106) is coupled with a support ring (54) via a step (114) in the inner wall of the closing sleeve (106) and is biased by a spring (62).

## Revendications

1. Bloc de soupapes servant à piloter un servofrein pneumatique (10) comprenant un boîtier de commande (30) dans lequel sont disposés un premier et un second sièges de soupape (32, 34) et un corps de soupape (40) pouvant s'appliquer sur les deux sièges de soupape (32, 34), qui
- dans une première position d'un organe d'actionnement (38) n'est soulevé que du premier siège de soupape (32), ce qui relie entre elles deux chambres (24, 26) du servofrein (10) et les isole toutes les deux d'une entrée d'air (50), et
- dans une autre position de l'organe d'actionnement (38) est soulevé du deuxième siège de soupape (34), ce qui isole l'une de l'autre les deux chambres (24, 26) et relie l'une d'elles à l'entrée d'air (50), et pourvu
- d'une soupape supplémentaire (30, 116) pourvue d'un troisième siège de soupape (66) annulaire, disposé à l'extérieur du boîtier de commande (30) et d'un manchon (72) qui entoure le boîtier de commande (30) avec un espacement radial et peut coulisser axialement par rapport à celui-ci et est précontraint en direction du troisième siège de soupape (66) et qui forme un canal d'aération supplémentaire (80) vers une (26) des deux chambres,
caractérisé en ce que
- le manchon (72) peut être déplacé au moyen d'un dispositif d'actionnement électromagnétique (90) pour ouvrir le troisième siège de soupape (66).

2. Bloc de soupapes selon la revendication 1,
caractérisé en ce que
le dispositif d'actionnement électromagnétique (90) présente un induit (94) qui est couplé à l'organe d'actionnement mécanique (38) du servofrein (10).

3. Bloc de soupapes selon la revendication 1 ou 2,
caractérisé en ce que
une bobine (92) du dispositif d'actionnement électromagnétique (90) entoure concentriquement l'organe d'actionnement mécanique (38) du servofrein (10) et en ce qu'un boitier (96) de la bobine (92) peut être déplacé par rapport à l'organe d'actionnement (38) pour déplacer le manchon (72).

4. Bloc de soupapes selon l'une quelconque des revendications précédentes,
caractérisé en ce que
un manchon de fermeture (106) qui empêche lors d'une ouverture du troisième siège de soupape (66) au moyen du dispositif d'actionnement électromagnétique (90) une aération de la chambre évacuée (64) du servofrein, est disposé dans le boîtier de commande (30)

5. Bloc de soupapes selon la revendication 4,
caractérisé en ce que
le manchon de fermeture (106) présente une étanchéité extérieure (108) assurant l'étanchéité contre la surface intérieure du manchon (72) et une surface d'étanchéité intérieure (110) qui peut être amenée en contact étanche avec un bord d'étanchéité (112) pour fermer le canal de communication entre les deux chambres (24, 26) du servofrein (10).

6. Bloc de soupapes selon la revendication 5,
caractérisé en ce que
le manchon de fermeture (106) est couplé à une bague d'appui (54) par un gradin (114) formé dans la paroi intérieure du manchon de fermeture (106) et est précontraint par un ressort (62).
